(19) Europäisches Patentamt

European Patent Office

Office européen des brevets

(11) Veröffentlichungsnummer: **0 338 362 B1**

# (12) EUROPÄISCHE PATENTSCHRIFT

(45) Veröffentlichungstag der Patentschrift: **09.12.92**

(51) Int. Cl.⁵: **E06B 9/36**

(21) Anmeldenummer: **89106276.2**

(22) Anmeldetag: **10.04.89**

(54) **Sonnenschutzeinrichtung.**

(30) Priorität: **18.04.88 DE 8805107 U**

(43) Veröffentlichungstag der Anmeldung:
**25.10.89 Patentblatt 89/43**

(45) Bekanntmachung des Hinweises auf die
Patenterteilung:
**09.12.92 Patentblatt 92/50**

(84) Benannte Vertragsstaaten:
**CH DE GB IT LI**

(56) Entgegenhaltungen:
**EP-A- 0 251 311**
**EP-A- 0 261 304**
**CH-A- 410 360**
**US-A- 2 848 045**
**US-A- 3 500 896**

(73) Patentinhaber: **SIEMENS AKTIENGESELL-
SCHAFT**
**Wittelsbacherplatz 2**
**W-8000 München 2(DE)**

(72) Erfinder: **Mönch, Julius**
**Narzissenweg 10**
**W-8508 Wendelstein(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die Erfindung bezieht sich auf eine Sonnenschutzeinrichtung nach Art eines venetianischen Vorhangs gemäß dem Oberbegriff des Patentanspruches 1. Eine Sonnenschutzeinrichtung dieser Art ist - mit Ausnahme des elektrischen Antriebes anstelle einer manuellen Verstellung der Lamellen - aus US-A-2 848 045 bekannt.

Sonnenschutzeinrichtungen dieser Art sind weiterhin aus EP-A2-0 261 304 bekannt. Sie haben wie alle Sonnenschutzeinrichtungen dieser Art den Nachteil, daß sie den vor der direkten Sonneneinstrahlung abzuschirmenden Raum in erheblichem Maße abdunkeln. Außerdem wird hierbei, sofern derartige Lamellenvorhänge auf der Rauminnenseite vor dem Fenster angebracht werden, die durch das direkte Sonnenlicht bewirkte Aufheizung des Raumes praktisch nicht verhindert.

Der Erfindung liegt die Aufgabe zugrunde, für eine Sonnenschutzeinrichtung der einleitend genannten Art eine weitere Lösung anzugeben, die auch bei Anordnung des Lamellenvorhangs auf der Rauminnenseite vor dem Fenster eine Aufheizung des Raumes durch die direkte Sonneneinstrahlung weitestgehend verhindert und darüber hinaus das durch das Fenster in den Raum einfallende Licht nur unwesentlich dämpft.

Diese Aufgabe wird gemäß der Erfindung durch die im Kennzeichen des Patentspruches 1 angegebenen Merkmale gelöst.

Von Prismenplatten mit retroreflektierenden Eigenschaften Gebrauch machende Sonnenschutzeinrichtungen sind beispielsweise aus EP-A1-0 199 931 oder auch aus EP-A1-0 251 311 bekannt.

Der Erfindung liegt die Erkenntnis zugrunde, daß sich eine solche von retroreflektierenden Eigenschaften Gebrauch machende Sonnenschutzeinrichtung auch in Form einer auch auf der Rauminnenseite vor dem Fenster anbringbaren, nach Art eines venetianischen Vorhangs gestalteten Ausführung realisieren läßt, sofern durch besondere, die Mechanik betreffende Maßnahmen dafür gesorgt wird, daß das Auf- und Zuziehen dieses Lamellenvorhangs mit solcher Präzision vorgenommen wird, daß einerseits durch die sämtlichen Lamellen gemeinsame Drehführung eine stets exakte Ausrichtung der Lamellen zur Einfallsrichtung der Sonnenstrahlen in Abhängigkeit der Sonnenbewegung gewährleistet wird und andererseits im zugezogenen Zustand des Lamellenvorhangs die Lamellen stets den exakt gleichen gegenseitigen Abstand aufweisen.

Der hohe Reflexionsgrad der die direkt einfallende Sonnenstrahlung reflektierenden Prismenplatten verhindert auch bei Anordnung der Sonnenschutzeinrichtung auf der Rauminnenseite weitgehend das durch diese direkte Sonneneinstrahlung ansonsten bedingte Aufheizen des Raums, ohne daß hierdurch das in den Raum einfallende Tageslicht merklich gedämpft wird.

Der Lamellenvorhang nach der Erfindung hat im Unterschied zu bisher bekannten, von der Retroreflexion Gebrauch machenden Sonnenschutzeinrichtungen den außerordentlich großen Vorteil, daß er auf- und zuziehbar ist, also auch bei seiner Anordnung auf der Innenseite eines Fensters die Möglichkeit gibt, bei Bedarf im aufgezogenen Zustand das dann freigegebene Fenster zu öffnen oder zu reinigen.

Zweckmäßige Ausgestaltungen des Gegenstandes nach dem Patentanspruch 1 sind in den weiteren Patentansprüchen 2 bis 11 angegeben.

Ein Ausführungsbeispiel der Erfindung wird im folgenden anhand der Zeichnung näher beschrieben. Dabei zeigen :

| | |
|---|---|
| Fig. 1 | die perspektivische Darstellung eines vor einem Fenster zugezogenen Lamellenvorhangs |
| Fig. 2 | den Lamellenvorhang nach Fig. 1 im aufgezogenen Zustand, |
| Fig. 3 | nähere Einzelheiten des Lamellenvorhangs nach den Figuren 1 und 2 in perspektivischer Darstellung, |
| Fig. 4 | einen Querschnitt der Führungsschiene entsprechend den Figuren 1 bis 3 mit einer bevorzugten Ausführung einer Spindellagerung, |
| Fig. 5 | einen Querschnitt der Führungsschiene nach den Figuren 1 bis 3 für eine weitere Ausführung einer Spindellagerung, |
| Fig. 6 und 7 | eine die Funktion von Spindel-Schlepplagern für die Spindellagerung entsprechend Fig. 5 näher erläuternde Darstellung, |
| Fig. 8 | die schematische Darstellung der Seitenansicht eines Teils der in der Führungsschiene hintereinander angeordneten und mittels Abstandshalter gegenseitig verbundenen Getriebeelemente, |
| Fig. 9 | die Aufsicht auf die Getriebeelementfolge nach Fig. 8, |
| Fig.10 | eine das Lösen der gegenseitigen Verbindung der Getriebeelemente über die Abstandshalter beim Aufziehen des Lamellenvorhangs erläuternde Darstellung entsprechend den Fig. 8 und 9. |

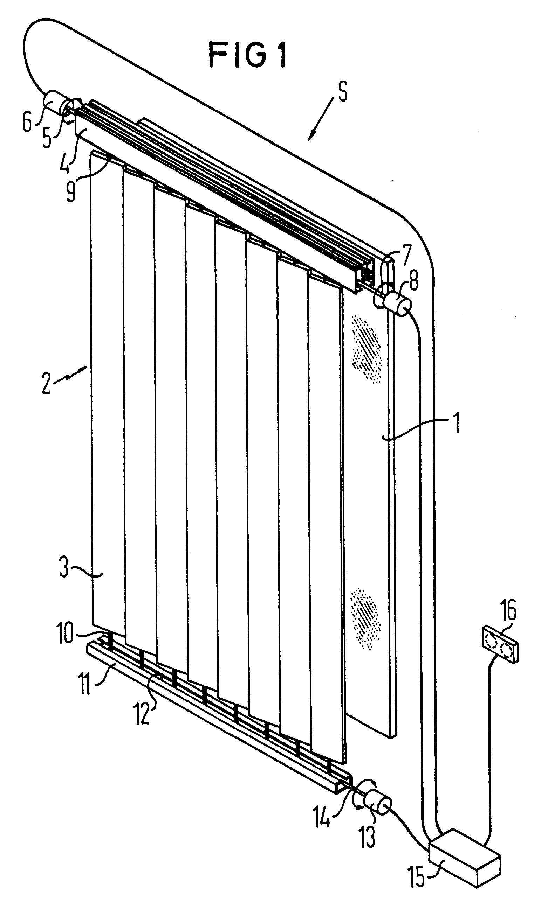

Die perspektivische Darstellung der Fig. 1 zeigt ein Fenster 1 in Form einer Scheibe, vor der auf der Rauminnenseite ein Lamellenvorhang 2 mit vertikal ausgerichteten Lamellen 3 angeordnet ist.

Für den Lamellenvorhang 2 ist an der Oberseite des Fensters 1 eine Führungsschiene 4 vorhanden, die in üblicher Weise an einer nicht dargestellten Raumdecke befestigt sein kann und in der für jede Lamelle 3 ein hier nicht sichtbares Getriebeelement verfahrbar angeordnet ist. Für das Verschieben der Getriebeelemente längs der Führungsschiene ist eine Spindel 5 mit einem elektrischen Antrieb 6 vorgesehen. Die Lamellen 3 selbst sind an den senkrecht nach unten aus der Führungsschiene 4 herausragenden Drehachsen 9 der ihnen zugeordneten Getriebeelemente befestigt. Allen Getriebeelementen ist eine Antriebswelle 7 mit einem elektrischen Antrieb 8 gemeinsam zugeordnet, über die die Drehstellung der Lamellen eingestellt werden kann. An der Unterseite des Fensters 1 ist eine der Führungsschiene 4 zugeordnete Rohrschiene 11 mit einem Längsschlitz 12 an der Oberseite vorgesehen, in die an der Unterseite der Lamellen 3 vorgesehene Führungsstifte 10 eingreifen. Die Führungsstifte 10 sind dabei mit ihrer Achse in der Drehachse der Lamellen 3 angeordnet. Durch die in den Längsschlitz 12 der Rohrschiene 11 ragenden Enden der Führungsstifte 10 können die Lamellen 3 im zugezogenen Zustand des Lamellenvorhangs 2 hinsichtlich ihrer Sollstellungen justiert und zugleich fixiert werden. Das hierzu in der Rohrschiene 11 angeordnete noch näher zu beschreibende justierende Fixiermittel wird von dem elektrischen Antrieb 13 über die Drehachse 14 betätigt.

Die aus lichtbrechendem Material mit retroreflektierenden Eigenschaften bestehenden Lamellen 3 müssen jeweils senkrecht zur Ebene der durch das Fenster 1 einfallenden Sonnenstrahlen S ausgerichtet sein, um sie wirksam reflektieren zu können. Hierzu ist eine Steuereinrichtung 15 vorgesehen, die in Verbindung mit einem ortsfesten Lichtsensor 16 die Solldrehstellung der Lamellen 3 der Sonnenbewegung nachsteuert. Die Steuereinrichtung 15 steuert auch das Auf- und Zuziehen des Lamellenvorgangs 2 über den elektrischen Antrieb 6 für die Spindel 5 sowie das Justieren und Fixieren der Führungsstifte 10 über den elektrischen Antrieb 13.

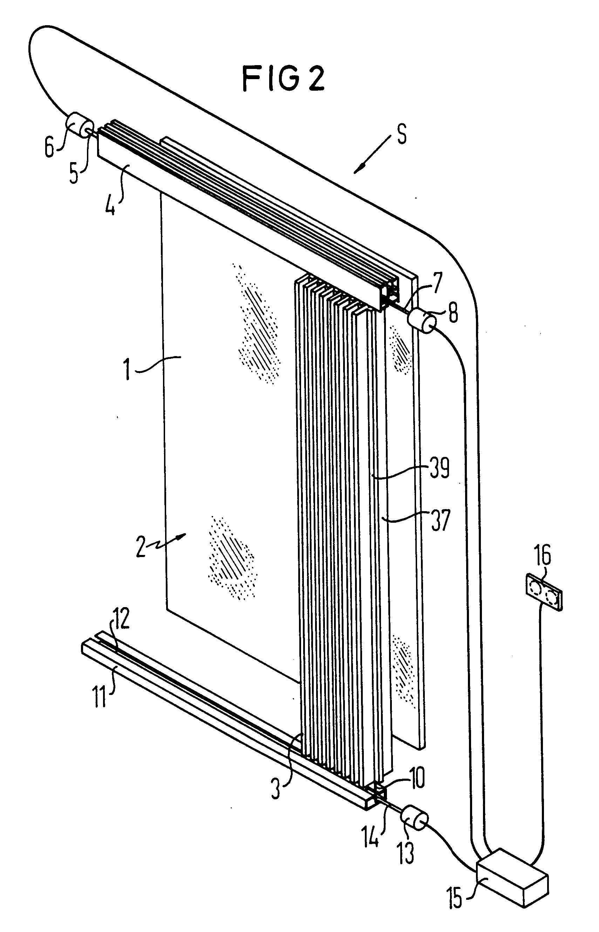

Zum Aufziehen des Lamellenvorhangs 2 nach Fig. 1 gibt die Steuereinrichtung 15 zunächst über den elektrischen Antrieb 13 die Fixierung der Führungsstifte 10 in der Rohrschiene 11 frei. Anschließend werden die Lamellen 3 mit ihrer Schmalseite von der Steuereinrichtung 15 über den elektrischen Antriebs 8 um etwa 90° in eine zur Verfahrrichtung senkrechte Lage gedreht und dann mittels des Spindelantriebs 5/6 sämtliche Lamellen 3 nach links zusammengeschoben. Fig. 2 zeigt den Lamellenvorhang 2 in der aufgezogenen Endstellung.

Wie Fig. 2 noch erkennen läßt, weisen die Lamellen 3 auf ihrer glatten, dem Fenster 1 im zugezogenen Zustand des Lamellenvorhangs zugewandten Vorderseite 37 mittig eine ihrer Verwindungssteifigkeit dienende, parallel zu ihren Längsseiten ausgerichtete Versteifungsrippe 39 auf.

Wie der perspektivisch dargestellte Teilausschnitt des Lamellenvorhangs 2 nach den Figuren 1 und 2 in Fig. 3 zeigt, weisen die kastenförmigen Getriebeelemente 17 an der Oberseite auf gegenüberliegenden Seiten flanschartige Ansätze 18 auf, die ihrer Führung in seitlichen Nuten 34 der Führungsschiene 4 dienen. Weiterhin haben die Getriebeelemente 17 an ihrer Oberseite auf beiden Seiten jeweils zwei zueinander parallele Schlitze 19. Ein Schlitz 19 eines Schlitzpaares dient der drehbaren Lagerung eines hier verankerten Flachhebels 21 in einem Zapfen 20. Der jeweils andere Schlitz eines Schlitzpaares, der ebenfalls vom Zapfen 20 überbrückt wird, dient dem Eingriff des freien Endes eines Flachhebels 21, der hierbei an einem benachbarten Getriebeelement 17 im Zapfen 20 eines seiner hierfür vorgegebenen Schlitze 19 drehbar gelagert ist.

Jedes Getriebeelement 17 für eine Lamelle 3 stellt ein 90°-Umlenkgetriebe dar. Dieses 90°-Umlenkgetriebe weist eine in seiner Achse parallel zur Achse der Führungsschiene ausgerichtete, als Hohlzylinder ausgebildete Schnecke 22 auf, die in Eingriff mit einem auf der Drehachse 9 verankerten Schneckenrad 23 steht. Die allen Getriebeelementen 17 gemeinsame Antriebswelle 7 hat hier ein Sechseckprofil und steht mit dem Schneckenrad 23 sämtlicher Getriebeelemente 17 in Eingriff.

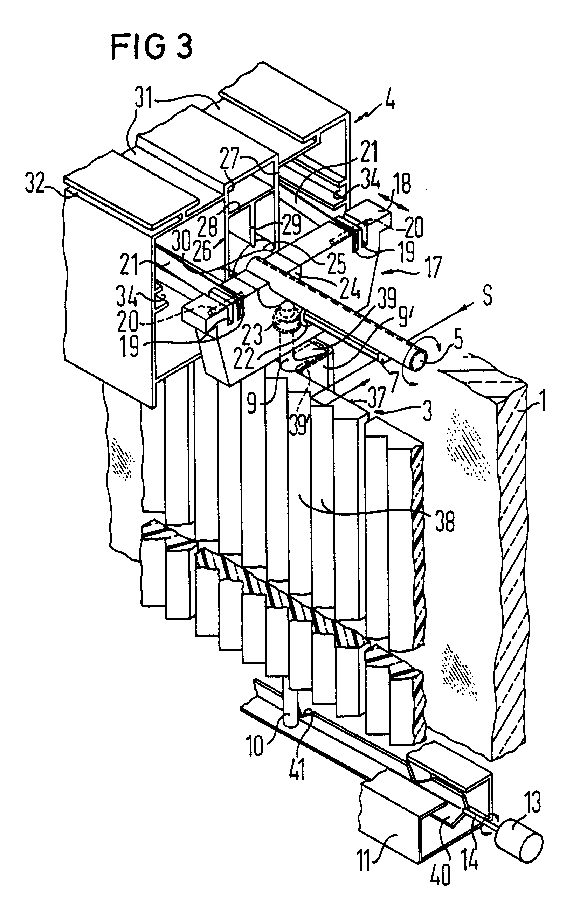

Das in Fig. 3 gezeigte Getriebeelement 17 ist der ersten Lamelle 3 des Lamellenvorhangs 2 zugeordnet und steht mit der Spindel 5 in Eingriff. Hierzu ist an der Oberseite des Getriebeelements 17 mittig ein 1/3-Gewindemuttersegment 24 vorgesehen. Die Spindel 5 selbst ist, um ein Durchhängen über ihre Länge zu verhindern, in der Führungsschiene 4 in einem sich über die Länge der Führungsschiene 4 erstreckenden Spindellager 25 gehaltert, das hierbei ein 2/3-Lager ist und beispielsweise ein Polyamid-Kunststoffteil sein kann. Für die Halterung des Spindellagers 25 weist das Rechteckprofil der Führungsschiene 4 eine sich von oben bis in Höhe der seitlichen Nuten 34 erstreckende Steganordnung 26 auf. Diese Steganordnung 26 besteht aus zwei zueinander parallelen Innenstegen 27, die in etwa halber Höhe miteinander durch einen Quersteg 28 verbunden sind. Von der Mitte des Querstegs 28 erstreckt sich nach unten weiterhin ein Längssteg 29, der jedoch oberhalb der freien Enden der Innenstege endet. Die freien Enden der Innenstege 27 haben auf ihren einander gegenüberliegenden Seiten ein Leistenprofil 30, das der Halterung des zwischen die Innenstege von unten in die Steganordnung 26 eingesetzten Spindellagers 25 dient. An der Oberseite weist die Führungsschiene Haltenuten 31 für ihre Befestigung, beispielsweise an einer Deckenschiene, sowie eine seitliche Stecknut 32 auf.

Die Lamellen 3 aus lichtbrechendem Material haben eine Rückseite, die aus lückenlos nebeneinander und parallel zu den Lamellenlängsseiten verlaufenden gleichschenkligen Prismen 38 besteht. Durch diese Prismen werden bei Ausrichtung der Lamellen 3 mit ihrer glatten Vorderseite 37 senkrecht zur Einfallsebene der Sonnenstrahlen S diese total reflektiert. Zur Halterung der Lamellen 3 an den Drehachsen 9 der Getriebeelemente 17 haben die Drehachsen 9 an ihrem unteren Rand einen Rastschuh 9', der jeweils die Versteifungsrippe 39 einer Lamelle 3 am oberen Rand umfaßt und in eine Hinterschneidung 39' der Versteifungsrippe einrastet.

Wie Fig. 3 noch erkennen läßt, befindet sich in der Rohrschiene 11 eine über die Drehachse 14 mit dem elektrischen Antrieb 13 verbundene Fixierschiene 40 in Form einer Winkelschiene, in deren nach oben ausgerichtetes Winkelblech die Sollstellungen der Führungsstifte 10 der Lamellen 3 bei zugezogenem Lamellenvorhang 2 markierende V-förmige Schlitze 41 eingelassen sind. Beim Umklappen der Fixierschiene 40 nach vorn um 90° werden die Führungsstifte 10 der Lamellen 3 sowohl hinsichtlich ihrer Sollage justiert als auch dort fixiert.

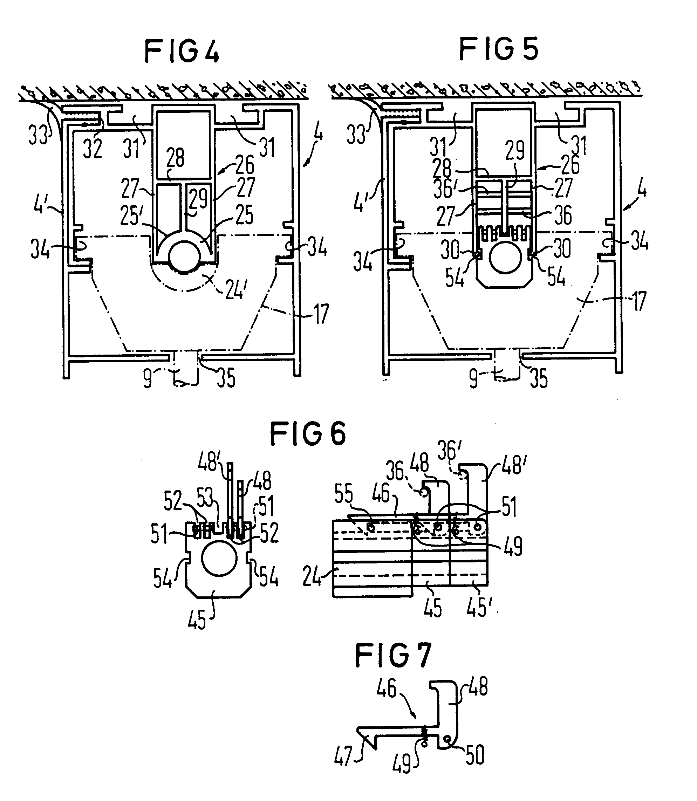

Fig. 4 zeigt eine bevorzugte Ausführungsform des Querschnittsprofils der Führungsschiene 4 mit den seitlichen Nuten 34 für die Führung der Getriebeelemente 17 und der Steganordnung 26. Das 2/3-Spindellager 25 ist hier unmittelbar an die freien Enden der Längsstege 27 und des Innenstegs 29 angeformt, ist also fester Bestandteil der Führungsschiene 4.

An der Unterseite hat die Führungsschiene 4 für den Durchtritt der Drehachsen 9 der Getriebeelemente 17 einen durchgehenden Mittenschlitz 35. In die Stecknut 32 greift einerseits, ein Abdeckprofil 4' mit seinem oberen abgebogenen Rand als auch eine Abdeckleiste 33 ein, die den Abschluß zur angedeuteten Decke hin bildet.

Die der Fig. 4 entsprechende Fig. 5 zeigt eine Alternative zum 2/3-Spindellager 25 entsprechend den Ausführungen nach den Figuren 3 und 4. Anstelle dieses 2/3-Spindellagers 25 werden hier in der Steganordnung 26, und zwar im Leistenprofil 30 der Längsstege 27 sowie im freien unteren Ende des Innensteges 29

Spindel-Schlepplager 45 bzw. 45' geführt und gehaltert. Die Sollstellungen der Spindel-Schlepplager 45 bzw. 45' sind dabei an den entsprechenden Stellen der Führungsschiene 4 durch zwischen den Längsstegen 27 der Steganordnung 26 angebrachte Anschlagstifte 36 bzw. 36' markiert.

Diese in den Fig. 6 und 7 dargestellten Spindel-Schlepplager 45 bzw. 45' weisen jeweils ein in Fig. 7 für sich dargestelltes Mitnehmerkuppelelement 46 auf, das aus einem Kupplungshaken 47 und einem hierzu senkrecht ausgerichteten Anschlagfinger 48 bzw. 48' besteht. Das Mitnehmerkuppelelement 46 ist jeweils an der Oberseite eines Spindel-Schlepplagers 45 bzw. 45' in einem der Schlitze 52 in einem Zapfen 51 drehbar gelagert und hat hierzu eine Bohrung 50. Weiterhin greift am Kupplungshakenarm eine Feder 49 an, die das Mitnehmerkuppelelement in einer Solldrehlage am Spindel-Schlepplager 45 bzw. 45' hält. Die bei dieser Ausführung der Spindelhalterung in der Führungsschiene 4 verwendete 1/1-Gewindemutter 24 hat einen senkrecht zur Spindelachse ausgerichteten Mitnehmerkuppelzapfen 55, auf den bei Annäherung der Gewindemutter 24 an das Spindel-Schlepplager 45 dessen Kupplungshaken mit seiner Vorderkante aufläuft und schließlich durch Hintergreifen dieses Mitnehmerkuppelzapfens die gewünschte Ankopplung bewirkt. In entsprechender Weise werden bei Annäherung des Spindel-Schlepplagers 45 an das Spindel-Schlepplager 45' die beiden Spindel-Schlepplager aneinander gekoppelt. Hierbei hintergreift dann der Kupplungshaken 47 des dem Spindel-Schlepplager 45' fest zugeordneten Mitnehmerkuppelelements den Zapfen 51 am Spindel-Schlepplager 45.

Auf diese Weise werden die verteilt über die Länge der Führungsschiene vorgesehenen Schlepplager 45 bzw. 45' beim Aufziehen des Lamellenvorhangs von der Gewindemutter 24 hintereinander mitgenommen und zusammen mit der Gewindemutter 24 zu einem Schlepplagerverbund vereinigt. Beim Zuziehen des Lamellenvorhangs wird dieser Schlepplagerverbund durch aufeinander folgendes Abkuppeln der Spindel-Schlepplager 45 bzw. 45' an den Stellen, an denen der Anschlagfinger 48' bzw. 48 des Mitnehmerkuppelelements 46 auf den den ihm zugeordneten Anschlagstift 36' bzw. 36 aufläuft, wieder aufgelöst.

Die Ausnützung der Retroreflexion zum Ausblenden der direkten Sonneneinstrahlung erfordert eine präzise Führung der Lamellen 3 beim Auf- und Zuziehen des Lamellenvorhangs 2. In diesem Zusammenhang ist es auch wichtig, daß im zugezogenen Zustand des Lamellenvorhangs 2 die in der Führungsschiene 4 aufeinander folgenden Getriebeelemente 17 exakt stets den hierbei zu fordernden gegenseitigen maximalen Mittenabstand A haben. Um dies sicherzustellen, sind Abstandshalter in Form der bereits im Zusammenhang mit der Beschreibung der Fig. 3 erwähnten starren Flachhebeln 21 vorgesehen.

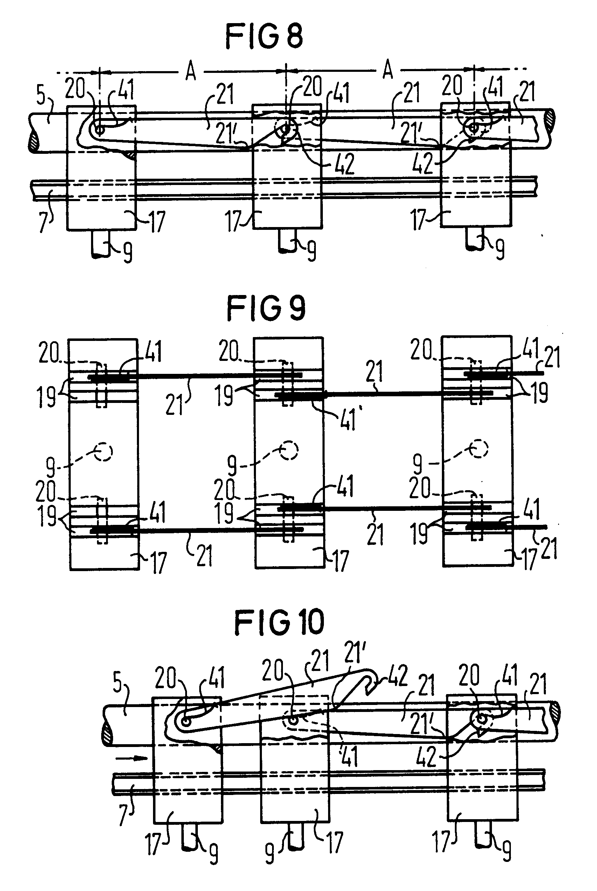

In den Figuren 8 und 9 sind in Seitenansicht und in Aufsicht drei aufeinander folgende, über Flachhebel 21 miteinander verbundene Getriebeelemente 17 dargestellt, wie das bei zugezogenen Lamellenvorhang 2 nach Fig. 1 der Fall ist. Insbesondere die Aufsicht in Fig. 9 zeigt, daß an der Oberseite jedes Getriebeelements 17 in gleichem Abstand von der Mitte zwei Flachhebel 21 in Zapfen 20 in jeweils einem von zwei einander benachbarten Schlitzen 19 drehbar gelagert sind. Während im links dargestellten Getriebeelement die Lagerung der stets nach rechts ausgerichteten Flachhebel 21 jeweils im äußeren Schlitz 19 eines Schlitzpaares erfolgt, sind die Flachhebel 21 beim nach rechts folgenden nächsten Getriebeelement 17 jeweils im Zapfen 20 im inneren Schlitz 19 eines Schlitzpaares drehbar gelagert. Diese Aufeinanderfolge von Flachhebelpaaren nach Art von Kettengliedern einer Fahrradkette ermöglicht es, einen Zapfen 20 jeweils gleichzeitig als Lager eines Flachhebels an einem Ende und als Gegenlager für einen anderen Flachhebel an seinem anderen als Hakenkopf 42 gestalteten Ende zu verwenden.

Die Flachhebel 21 haben an ihrem freien Hakenkopfende an der Unterseite eine Gleitnockenkontur 21′. Ferner stehen sie auf seiten ihrer Zapfenlagerung mit einer Feder 41 in Verbindung, durch die sie jeweils nach unten gegen den Zapfen 20 des ihnen hakenkopfseitig nahen Getriebeelements 17 verspannt sind. Wie Fig. 10 erkennen läßt, ist die Gleitnockenkontur 21′ von solcher Art, daß sich die Flachhebel 21 mit ihrem Hakenkopf 42 beim Aufziehen des Lamellenvorhangs gegen die Kraft der Feder 41 von den Zapfen 20 lösen und nach oben abheben. Beim Zuziehen des Lamellenvorhangs vollzieht sich dieser Vorgang in umgekehrter Richtung und gewährleistet ein stets sicheres Verhaken der Flachhebel 21 in den ihnen zugeordneten Zapfen 20.

Bei einer bevorzugten Ausführungsform eines solchen Lamellenvorhangs beträgt der Abstand A, bei einer Lamellenbreite von 56 mm, 57 mm.

## Patentansprüche

1. Sonnenschutzeinrichtung nach Art eines venetianischen Vorhangs mit elektrischem Antrieb (6) für die Lamellendreh- und -verfahrstellung, bei der die nebeneinander angeordneten vertikalen Lamellen (3) mit einem maximalen gegenseitigen Mittenabstand jeweils in einer parallel zu ihren Längsseiten in der Lamellenebene verlaufenden Drehachse um ca. 180° drehbar an der Drehachse (9) eines Getriebeelementes (17) gehaltert sind, bei der die Getriebeelemente mit den daran nach unten hängenden Lamellen in einer horizontalen Führungsschiene (4) an der Fensteroberseite verfahrbar sind, bei der den 90°-Umlenkgetriebe darstellenden Getriebeelementen gemeinsam eine parallel zur Führungsschiene verlaufende, ein Mehrkantprofil aufweisende Antriebswelle (7) zugeordnet ist, die mit als Hohlzylinder gestalteten Schnecken (22) der Getriebeelemente formschlüssig in Eingriff steht und auf der die Getriebelemente mit ihren Schnecken axial verschiebbar sind, bei der zum Auf- und Zuziehen des Lamellenvorhangs ein Spindelantrieb mit einer in der Führungsschiene angeordneten und mit ihrer Achse parallel zur Führungsschiene ausgerichteten Spindel (5) vorgesehen ist, die lediglich mit dem Getriebeelement, an dem die vorderste Lamelle des Lamellenvorhangs hängt, mit dem Spindelgewinde in Eingriff steht, und bei der zur Einhaltung des maximalen gegenseitigen Mittenabstandes zwischen längs der Führungsschiene aufeinander folgenden Getriebeelementen Abstandshalter (21) vorgesehen sind,

**dadurch gekennzeichnet,**

- daß das Getriebeelement (17), an dem die vorderste Lamelle (3) des Lamellenvorhangs hängt, über eine mit diesem Getriebeelement verbundene Gewindemutter (24, 24') mit der Spindel (5) in Eingriff steht und die Spindel wenigstens im zugezogenen Zustand des Lamellenvorhangs in ihrer Erstreckung mehrfach gelagert ist,

- daß die Abstandshalter in sich starre Flachhebel (21) sind, über die die einander jeweils benachbarten Getriebeelemente (17) miteinander eine lösbare starre Verbindung eingehen, sobald beim Zuziehen des Lamellenvorhangs (2) die einander jeweils benachbarten Getriebeelemente den maximalen gegenseitigen Mittenabstand (A) erreichen,

- daß die Lamellen (3) an ihrem freien unteren Ende jeweils einen mit seiner Achse in der Drehachse (9) angeordneten Führungsstift (10) aufweisen, mit dem sie in den Längsschlitz (12) einer an der Fensterunterseite und parallel zur Führungsschiene (4) an der Fensteroberseite angeordneten Rohrschiene (11) eingreifen,

- daß ferner in dieser Rohrschiene eine um eine zur Rohrachse parallele Achse dreh- bzw. klappbare Fixierschiene (40) vorgesehen ist, die randseitige, die Sollstellungen der Führungsstifte (10) bei zugezogenem Lamellenvorhang (2) markierende V-förmige Schlitze (41) aufweist, in denen die Führungsstifte durch Umklappen der Fixierschiene bezüglich ihrer Sollage justiert und fixiert sind,

- daß außerdem die Lamellen (3) aus lichtbrechendem Material bestehen, die eine zum einfallenden Licht hin ebene Vorderseite (37) und eine Rückseite aufweisen, die aus lückenlos nebeneinander und parallel zu den Lamellenlängsseiten verlaufenden Prismen (38) mit einer den Lamellen retroreflektierende Eigenschaften gebenden Kontur gestaltet ist,

- und daß der elektrische Antrieb (6) für die Spindel (5) und der elektrische Antrieb (8) für die sämtlichen Getriebeelementen (17) gemeinsame Antriebswelle (7) von einer Steuereinrichtung (15) in Verbindung mit einem Lichtsensor (16) in Abhängigkeit der Intensität und des Einfallswinkels der Sonnenstrahlen (S) so betätigt wird, daß die Retroreflexion des Lamellenvorhangs (2) im Sinne der Blendfreiheit des durch das Fenster (1) einfallenden Tageslichts stets gewährleistet ist.

2. Sonnenschutzeinrichtung nach Anspruch 1, **dadurch gekennzeichnet,** daß die Flachhebel (21) am einen Ende an dem ihnen jeweils zugeordneten Getriebeelement (17) in einem horizontalen, senkrecht zur Spindelachse ausgerichteten Zapfen (20) drehbar gelagert sind und zum freien Ende zu unter der Einwirkung einer Feder (41) auf dem entsprechenden horizontalen, senkrecht zur Spindelachse ausgerichteten Zapfen (20) eines jeweils benachbarten Getriebeelements gleiten und sich mit ihrem zu einem Hakenkopf (42) gestalteten freien Ende in diesen Zapfen einhängen, sobald im Zuge des Zuziehens des Lamellenvorhangs (2) mittels des Spindelantriebs (5/6) der maximale gegenseitige Mittenabstand (A) erreicht ist.

3. Sonnenschutzeinrichtung nach Anspruch 1 oder 2, **dadurch gekennzeichnet,** daß an jedem Getriebeelement (17) auf beiden Seiten der in der Führungsschienenmitte verlaufenden Spindel (5) jeweils ein Flachhebel (21) mit seinem einen Ende in einem Zapfen (20) drehbar gelagert ist, die zueinander parallel ausgerichtet sind und deren gegenseitiger Abstand zwischen aufeinander folgenden Getriebeelementen jeweils so unterschiedlich gestaltet ist, daß der Zapfen (20), in dem ein Flachhebel (21) an einem Getriebeelement (17) drehbar gelagert ist, zugleich als Gegenlager für den am benachbarten Getriebeelement in einem Zapfen (20) drehbar gelagerten Flachhebel (21) verwendbar ist.

4. Sonnenschutzeinrichtung nach einem der vorhergehenden Ansprüche, **dadurch gekennzeichnet,** daß die Führungsschiene (4) ein Rechteckhohlprofil mit seitlichen Nuten (34) für die Führung der Getriebeelemente (17) ist, daß dieses Rechteckprofil an der Unterseite einen durchgehenden Mittenschlitz (35) für die Drehachse (9) der Getriebeelemente aufweist und daß das Rechteckprofil eine sich von oben bis in Höhe der seitlichen Nuten (34) erstreckende, der Spindellagerhalterung dienende Steganordnung (26) aufweist.

5. Sonnenschutzeinrichtung nach Anspruch 4, **dadurch gekennzeichnet,** daß die Steganordnung (26) des Rechteckhohlprofils der Führungsschiene (4) aus zwei zueinander parallelen Längsstegen (27) besteht, die in etwa halber Höhe miteinander durch einen Quersteg (28) verbunden sind, daß sich ferner von der Mitte des Querstegs (28) nach unten ein Innensteg (29) erstreckt, der jedoch oberhalb der freien Enden der Längsstege (27) endet und an die freien Enden der Längsstege sowie an das freie Ende des Innenstegs ein sich über die Länge der Führungsschiene (4) erstreckendes 2/3-Spindellager (25) unmittelbar angeformt ist.

6. Sonnenschutzeinrichtung nach Anspruch 4, **dadurch gekennzeichnet,** daß die Steganordnung (26) des Rechteckhohlprofils der Führungsschiene (4) aus zwei zueinander parallelen Längsstegen (27) besteht, die in etwa halber Höhe miteinander durch einen Quersteg (28) verbunden sind, daß sich ferner von der Mitte des Querstegs (28) nach unten ein Innensteg (29) erstreckt, der jedoch oberhalb der freien Enden der Längsstege (27) endet, daß außerdem die freien Enden der Längsstege auf ihren einander gegenüber liegenden Seiten ein Leistenprofil (30) haben und daß in der Steganordnung (26) über die Länge der Führungsschiene (4) ein 2/3-Spindellager (25) aus einem geeigneten Kunststoff sowohl am Leistenprofil (30) der Längsstege als auch am Innensteg (29) gehaltert ist.

7. Sonnenschutzeinrichtung nach Anspruch 5 oder 6, **dadurch gekennzeichnet,** daß die mit dem Getriebeelement (17) für die vorderste Lamelle (3) des Lamellenvorhangs (2) verbundene Gewindemutter, die auf der Spindel geführt ist, aus einem diesem 2/3-Spindellager angepaßten 1/3-Gewindemuttersegment (24') besteht.

8. Sonnenschutzeinrichtung nach Anspruch 4,
**dadurch gekennzeichnet,**
daß die Steganordnung (26) des Rechteckhohlprofils der Führungsschiene (4) aus zwei zueinander parallelen Längsstegen (27) besteht, die in etwa halber Höhe miteinander durch einen Quersteg (28) verbunden sind, daß sich ferner von der Mitte des Querstegs (28) nach unten ein Innensteg (29) erstreckt, der jedoch oberhalb der freien Enden der Längsstege (27) endet, daß außerdem die freien Enden der Längsstege auf ihren einander gegenüber liegenden Seiten ein Leistenprofil (30) haben, daß weiterhin am Leistenprofil und am Innensteg mehrere Spindel-Schlepplager (45, 45') längs der Führungsschiene (4) verschiebbar gehalten sind, daß außerdem diesen Spindel-Schlepplagern durch die Führungsschiene vorgegebene, über die Länge der Führungschiene gleichmäßig verteilte Schiebestellungen zugeordnet sind, die von den Spindel-Schlepplagern bei zugezogenem Lamellenvorhang (2) eingenommen sind und daß die Spindel-Schlepplager Mitnehmerkupplungen (46/51, 55) aufweisen, die bei Aufziehen des Lamellenvorhangs (2) jeweils aktiviert sind, sobald die Gewindemutter (24) auf der Spindel das ihr benachbarte Spindel-Schlepplager (45) bzw. ein von der Gewindemutter auf der Spindel bereits mitgenommenes Spindel-Schlepplager (45) das ihm benachbarte Spindel-Schlepplager (45') erreicht und die jeweils deaktiviert sind, sobald beim Zuziehen des Lamellenvorhangs (2) ein im Spindel-Schlepplagerverbund mit der Gewindemutter (24) auf der Spindel (5) mitlaufendes Spindel-Schlepplager (45, 45') die ihm zu-geordnete Schiebestellung längs der Füh-rungsschiene (4) erreicht hat.

9. Sonnenschutzeinrichtung nach einem der vorhergehenden Ansprüche,
**dadurch gekennzeichnet,**
daß die Fixierschiene (40) einen von der Steu-ereinrichtung (15) gesteuerten elektrischen An-trieb (13) hat.

10. Sonnenschutzeinrichtung nach einem der vorhergehenden Ansprüche,
**dadurch gekennzeichnet,**
daß die Lamellen (3) mittig auf der ebenen Vorderseite (37) eine ihrer Verwindungssteifigkeit dienende, parallel zu ihren Längsseiten ausgerichtete Versteifungsrippe (39) aufweisen und daß das freie Ende der Drehachse (9) der Getriebeelemente (17) in einen Rastschuh (9') ausmündet, in den die jeweils zugeordnete Lamelle (3) mit dem oberen Ende ihrer hier eine Hinterschneidung (39') aufweisenden Versteifungsrippe rastend eingreift.

11. Sonnenschutzeinrichtung nach einem der vorhergehenden Ansprüche,
**dadurch gekennzeichnet,**
daß die Lamellenbreite 56 mm und der maximale gegenseitige Mittenabstand (A) zwischen zwei einander benachbarten Lamellen (3) 57 mm beträgt.

**Claims**

1. Sun shade device in the manner of a Venetian blind having an electric drive (6) for the rotary and displacement setting of the slats, wherein the vertical slats (3) arranged adjacently are mounted with a maximum mutual central spacing in each case in an axis of rotation running parallel to their longitudinal sides in the slat plane so as to be rotatable by about 180° on the axis of rotation (9) of a gearing element (17), wherein the gearing elements are displaceable with the slats hanging down thereon in a horizontal guide rail (4) on the upper side of the window, wherein a drive shaft (7) is assigned jointly to the gearing elements constituting the 90° deflection gearing, which drive shaft runs parallel to the guide rail, has a polygonal profile, is in positive engagement with worms (22), designed as hollow cylinders, of the gearing elements and on which the gearing elements are axially displaceable with their worms, wherein a spindle drive having a spindle (5), which is arranged in the guide rail and aligned with its axis parallel to the guide rail, is provided for opening and closing the slatted blind, said spindle being engaged by the spindle thread only with the gearing element on which the front slat of the slatted blind hangs, and wherein spacer bars (21) are provided to maintain the maximum mutual central spacing between gearing elements following successively along the guide rail,
characterised in that
   - the gearing element (17), on which the front slat (3) of the slatted blind hangs, is engaged with the spindle (5) via a threaded nut (24, 24') connected to said gearing element, and the spindle is mounted at a plurality of points along its extension at least in the closed state of the slatted blind,
   - the spacer bars are inherently rigid flat levers (21), via which the respectively adjacent gearing elements (17) come into a releasable rigid connection with one another as soon as the respectively adjacent gearing elements reach the maximum mutual central spacing (A) during closure of the slatted blind (2),

- the slats (3) have in each case at their free lower end a guide pin (10) which is arranged with its axis in the axis of rotation (9) and with which they engage in the longitudinal slot (12) in a tubular rail (11) arranged at the bottom side of the window and parallel to the guide rail (4) at the upper side of the window,

- a fixing rail (40) is additionally provided in this tubular rail, which fixing rail can be rotated or pivoted about an axis parallel to the tube axis and has V-shaped slots (41) at the edge, which slots mark the intended positions of the guide pins (10) when the slatted blind (2) is closed and in which the guide pins are adjusted and fixed by pivoting the fixing rail in respect of its intended position,

- the slats (3) are additionally composed of refractive material and have a front side (37), which is flat towards the incident light, and a rear side which is made of prisms (38) running adjacently without gaps and parallel to the longitudinal sides of the slats and having a contour which gives the slats retroreflecting properties,

- and the electric drive (6) for the spindle (5) and the electric drive (8) for the drive shaft (7) common to all the gearing elements (17) is actuated by a control device (15) in conjunction with a light sensor (16) as a function of the intensity and the angle of incidence of the solar rays (S) in such a way that the retroreflection of the slatted blind (2) is always guaranteed in the sense of freedom from glare from the daylight coming in through the window (1).

2. Sun shade device according to Claim 1, characterised in that the flat levers (21) are mounted at one end of the gearing element (17) respectively assigned to them so as to be rotatable in a horizontal journal (20) aligned perpendicular to the spindle axis and slide on the corresponding horizontal journal (20), aligned perpendicular to the spindle axis, of a respectively adjacent gearing element towards the free end under the effect of a spring (41) and engage in said journal with their free end designed in the form of a hook (42) as soon as the maximum mutual central spacing (A) has been achieved during the closure of the slatted blind (2) by means of the spindle drive (5/6).

3. Sun shade device according to Claim 1 or 2, characterised in that a flat lever (21) is mounted by its one end so as to be rotatable in a journal (20) in each case on each gearing element (17) on both sides of the spindle (5) running in the centre of the guide rail, said flat levers being aligned parallel to one another and their mutual spacing between successive gearing elements being so different in each case that the journal (20), in which a flat lever (21) is mounted so as to be rotatable on a gearing element (17), can also be used as a counter-bearing for the flat lever (21) mounted so as to be rotatable in a journal (20) on the adjacent gearing element.

4. Sun shade device according to one of the preceding claims, characterised in that the guide rail (4) is a rectangular hollow profile with lateral grooves (34) for guiding the gearing elements (17), in that said rectangular profile has on the underside a continuous central slot (35) for the axis of rotation (9) of the gearing elements, and in that the rectangular profile has a web arrangement (26) extending from the top to the level of the lateral grooves (34) and serving for mounting the spindle bearing.

5. Sun shade device according to Claim 4, characterised in that the web arrangement (26) of the rectangular hollow profile of the guide rail (4) is composed of two mutually parallel longitudinal webs (27) which are connected to one another about half way up by a transverse web (28), in that an inner web (29) also extends downwards from the centre of the transverse web (28), but ends above the free ends of the longitudinal webs (27), and a 2/3 spindle bearing (25) extending over the length of the guide rail (4) is moulded directly onto the free end of the inner web.

6. Sun shade device according to Claim 4, characterised in that the web arrangement (26) of the rectangular hollow profile of the guide rail (4) is composed of two mutually parallel longitudinal webs (27) which are connected to one another about half way up by a transverse web (28), in that an inner web (29) also extends downwards from the centre of the transverse web (28), but ends above the free ends of the longitudinal webs (27), in that the free ends of the longitudinal webs also have a strip profile (30) on their sides located opposite one another, and in that a 2/3 spindle bearing (25) made of a suitable plastic is mounted in the web arrangement (26) over the length of the guide rail (4) both on the strip profile (30) of the longitudinal webs and on the inner web (29).

7. Sun shade device according to Claim 5 or 6, characterised in that the threaded nut which is connected to the gearing element (17) for the front slat (3) of the slatted blind (2) and is guided on the spindle, is composed of a 1/3 threaded nut segment (24') adapted to said 2/3 spindle bearing.

8. Sun shade device according to Claim 4, characterised in that the web arrangement (26) of the rectangular hollow profile of the guide rail (4) is composed of two mutually parallel longitudinal webs (27) which are connected to one another about half way up by a transverse web (28), in that an inner web (29) also extends downwards from the centre of the transverse web (28), but ends above the free ends of the longitudinal webs (27), in that the free ends of the longitudinal webs also have a strip profile (30) on their sides located opposite one another, in that, furthermore, a plurality of spindle drag bearings (45, 45') are mounted on the strip profile and on the inner web so as to be displaceable along the guide rail (4), in that said spindle drag bearings are also assigned slide positions which are defined by the guide rail, evenly distributed over the length of the guide rail and are assumed by the spindle drag bearings when the slatted blind (2) is closed, and in that the spindle drag bearings have carrier couplings (46/51, 55) which are activated in each case during opening of the slatted blind (2) as soon as the threaded nut (24) on the spindle reaches the spindle drag bearing (45) adjacent to it or a spindle drag bearing (45), which has already been carried along by the threaded nut on the spindle, reaches the spindle drag bearing (45') adjacent to it, and which are deactivated in each case as soon as a spindle drag bearing (45, 45'), which is carried along in the spindle drag bearing engagement with the threaded nut (24) on the spindle (5), has reached the slide position assigned to it along the guide rail (4).

9. Sun shade device according to one of the preceding claims, characterised in that the fixing rail (40) has an electric drive (13) controlled by the control device (15).

10. Sun shade device according to one of the preceding claims, characterised in that the slats (3) have centrally on the flat front side (37) a reinforcing rib (39) serving for their torsional resistance and aligned parallel to their longitudinal sides, and in that the free end of the axis of rotation (9) of the gearing elements (17) opens out into a catch block (9') in which the respectively assigned slat (3) engages fixedly with the upper end of its reinforcing rib having an undercut (39') in this case.

11. Sun shade device according to one of the preceding claims, characterised in that the width of the slats is 56 mm and the maximum mutual central spacing (A) between two adjacent slats (3) is 57 mm.

**Revendications**

1. Dispositif de protection vis-à-vis du soleil à la manière d'un store vénitien, comprenant un dispositif électrique d'entraînement (6) pour le déplacement des lames et pour leur rotation, dans lequel les lames (3), verticales et disposées les unes a côté des autres, peuvent tourner respectivement, avec un intervalle mutuel maximum de centre à centre de 180° environ sur un axe de rotation s'étendant dans un plan de lame parallèle à leurs côtés longitudinaux et sont maintenues sur l'axe de rotation (9) d'un élément de transmission (17), dans lequel les éléments de transmission peuvent être déplacés, avec les lames qui en pendent vers le bas, dans un rail de guidage (4) horizontal du côté supérieur de la fenêtre, dans lequel aux éléments de transmission constituant des renvois à 90° est associé en commun un arbre d'entraînement (7), qui s'étend parallèlement au rail de guidage, qui présente un profil polygonal, qui coopère par complémentarité de forme avec des vis (22) en forme de cylindre creux des éléments de transmission et sur lequel les éléments de transmission avec leur vis peuvent coulisser axialement, dans lequel pour ouvrir et fermer le store à lames, il est prévu un dispositif d'entraînement à broche (5), qui est disposé dans le rail de guidage, dont l'axe est parallèle à l'axe de guidage et dont le filetage engrène seulement avec l'élément de transmission auquel est suspendue la lame la plus en avant du store, et dans lequel il est prévu, pour maintenir l'intervalle mutuel maximum, des entretoises (21) entre des éléments de transmission se succédant le long du rail de guidage, caractérisé
   - en ce que l'élément de transmission (17), auquel est suspendue la lame (3) la plus en avant du store, engrène avec la broche (5) par un écrou taraudé (24,24') relié à l'élément de transmission et, au moins lorsque le store est fermé, la broche est supportée plusieurs fois sur son étendue,

- en ce que les entretoises sont des leviers plats (21) rigides par eux-mêmes, par lesquels les éléments de transmission (17) voisins l'un de l'autre se relient rigidement l'un à l'autre avec possibilité de se détacher, dès que, lors de la fermeture du store (2) à lames, les éléments de transmission voisins l'un de l'autre atteignent l'intervalle mutuel maximum (A), les lames (3) comportant chacune, à leurs extrémités inférieures, un doigt de guidage (10), dont l'axe est sur l'axe de rotation (9) et par lequel elles pénètrent dans la fente (12) longitudinale d'un rail tubulaire (11) disposé parallèlement au rail de guidage (4) du côté supérieur de la fenêtre,

- en ce que, en outre, il est prévu, dans ce rail tubulaire, un rail d'immobilisation (40), tournant ou rabattable, qui est parallèle au rail tubulaire et qui comporte des fentes (41) marginales, en forme de V, repérant les positions de consigne des doigts de guidage (10) lorsque le store (2) à lames est fermé et dans lesquelles les doigts de guidage sont ajustés et sont immobilisés à leur position de consigne par rabattement du rail d'immobilisation,

- en ce que, en outre, les lames (3) sont en un matériau réfringent, présentent une face avant (37) plane pour la lumière incidente et une face arrière qui est conformée en prismes (38) s'étendant côte-à-côte sans intervalle et parallèlement aux côtés longitudinaux des lames et ayant un contour donnant aux lames des propriétés de rétroréflexion,

- et en ce que le dispositif électrique d'entraînement (6) de la broche (5) et le dispositif électrique d'entraînement (8) de l'arbre d'entraînement (7) commun à l'ensemble des éléments de transmission (17) sont actionnés par un dispositif de commande (15) en liaison avec un capteur de lumière (16) en fonction de l'intensité et de l'angle d'incidence du rayonnement solaire (S) de façon à assurer en permanence la rétroréflexion du store (2) à lames, en empêchant la lumière du jour incidente sur la fenêtre (1) d'être éblouissante.

2. Dispositif de protection vis-à-vis du soleil suivant la revendication 1, caractérisé

en ce que les leviers plats (21) sont montés tournants, par une extrémité, sur l'élément de transmission (17) qui leur est associé, dans un tourillon (20) horizontal, dirigé perpendiculairement à l'axe de la broche et glissent à l'extrémité libre, sous l'action d'un ressort (41) sur le tourillon (20) horizontal correspondant et perpendiculaire à l'axe de la broche d'un élément de transmission voisin et s'accrochent par leur extrémité libre conformée en une tête formant un crochet (42) dans ce tourillon, dès que, au cours de la fermeture du store (2) à lames au moyen du dispositif d'entraînement de la broche (5/6), l'intervalle mutuel maximum de centre à centre (A) est atteint.

3. Dispositif de protection vis-à-vis du soleil suivant la revendication 1 ou 2, caractérisé

en ce que, sur chaque élément de transmission (17), est monté tournant dans un tourillon (20) par l'une de ses extrémités, de part et d'autre de la broche (5) s'étendant au milieu du rail de guidage, respectivement des leviers plats (21) qui sont dirigés parallèlement les uns aux autres et dont la distance mutuelle entre des éléments de transmission successifs est différente de façon que le tourillon (20), dans lequel un levier plat (21) est monté tournant sur un élément de transmission (17), peut être utilisé en même temps comme contre-palier pour le levier plat (21) monté tournant dans un tourillon (20) sur l'élément de transmission voisin.

4. Dispositif de protection vis-à-vis du soleil suivant l'une des revendications précédentes, caractérisé

en ce que le rail de guidage (4) est un profilé creux rectangulaire ayant des gorges (34) latérales pour le guidage des éléments de transmission (17), en ce que ce profilé rectangulaire comporte, du côté inférieur, une fente centrale (35) continue pour l'axe de rotation (9) des éléments de transmission, et en ce que le profilé rectangulaire comporte un dispositif à réglettes (26), qui s'étend du haut jusqu'au niveau des gorges (34) latérales et qui sert de pièce de maintien du palier de la broche.

5. Dispositif de protection vis-à-vis du soleil suivant la revendication 4, caractérisé

en ce que le dispositif à réglettes (26) du profilé creux rectangulaire du rail de guidage (4) est constitué de deux réglettes longitudinales (27) parallèles l'une à l'autre et reliées à peu près à mi-hauteur l'une à l'autre par une réglette transversale (28) en ce qu'en outre, s'étend vers le bas, à partir du milieu de la réglette transversale (28), une réglette intérieure (29) qui se termine cependant au-dessus des extrémités libres des réglettes longitudinales (27) et, aux extrémités libres des réglettes longitudinales ainsi qu'à l'extrémité libre de la réglette intérieure, est formé d'une pièce un palier (25) pour les deux tiers de la broche s'étendant sur la longueur du rail de guidage (4).

6. Dispositif de protection vis-à-vis du soleil suivant la revendication 4,
caractérisé
en ce que le dispositif à réglettes (26) du profilé creux rectangulaire du rail de guidage (4) est constitué de deux réglettes longitudinales (27) parallèles entre elles et reliées à peu pris à mi-hauteur l'une à l'autre par une réglette transversale (28), en ce qu'en outre, s'étend vers le bas, à partir du milieu de la réglette transversale (28), une réglette intérieure (29), qui se termine cependant au-dessus des extrémités libres des réglettes longitudinales (27), en ce qu'en outre les extrémités libres des réglettes longitudinales ont, sur leurs côtés opposés l'un à l'autre, un profilé en forme de baguette (30) et en ce que, dans le dispositif à réglettes (26), un palier (25) pour les deux tiers de la broche, en une matière plastique convenable, est maintenu, sur la longueur du rail de guidage (4), à la fois sur le profilé en forme de baguette (30) des réglettes longitudinales et sur la réglette intérieure (29).

7. Dispositif de protection vis-à-vis du soleil suivant la revendication 5 ou 6,
caractérisé
en ce que l'écrou taraudé qui est relié à l'élément de transmission (17) pour la lame (3) la plus en avant du store (2) à lame et qui est guidé sur la broche, est constitué d'un segment d'écrou taraudé (24') s'étendant sur un tiers et adapté à ce palier de broche s'étendant sur les deux tiers.

8. Dispositif de protection vis-à-vis du soleil suivant la revendication 4,
caractérisé
en ce que le dispositif à réglettes (26) du profilé creux rectangulaire du rail de guidage (4) est constitué de deux réglettes longitudinales (27) parallèles l'une à l'autre, qui sont reliées entre elles à peu près à mi-hauteur par une réglette transversale (28), en ce qu'en outre, s'étend vers le bas, du milieu de la réglette transversale (28), une réglette intérieure (29) qui se termine cependant au-dessus des extrémités libres des réglettes longitudinales (27), en ce qu'en outre, les extrémités libres des réglettes longitudinales ont, sur leurs côtés mutuellement opposés, un profité en forme de baguette (30), en ce qu'en outre, sur le profité en forme de baguette et sur la réglette intérieure sont montés coulissants, le long du rail de guidage (4), plusieurs paliers en forme de coulisseaux (45, 45') pour la broche, en ce qu'en outre, à ces paliers en forme de coulisseaux pour la broche, sont associées des positions de coulissement prescrites par le rail de guidage et réparties uniformément sur la longueur de celui-ci, qui sont prises par les paliers en forme de coulisseaux pour la broche, lorsque le store (2) à lame est fermé et en ce que les paliers en forme de coulisseaux pour la broche comportent des accouplements d'entraînement (46/51, 55), qui sont activés respectivement lors de l'ouverture du store (2) à lames dès que l'écrou taraudé (24) atteint sur la broche son palier en forme de coulisseau (25) pour la broche dont il est voisin, ou dès qu'un palier en forme de coulisseau (45) pour la broche, déjà entraîné par l'écrou taraudé sur la broche, atteint le palier en forme de coulisseau (45') pour la broche dont il est voisin, et sont respectivement désactivés dès que, lors de la fermeture du store (2) à lames, un palier en forme de coulisseau (45,45') pour la broche, entraîné sur la broche (5) avec l'écrou taraudé (24) et alors que le palier formant coulisseau et la broche étant liés, a atteint la position de coulissement le long du rail de guidage (4), qui lui est associé.

9. Dispositif de protection vis-à-vis du soleil suivant l'une des revendications précédentes,
caractérisé
en ce que le rail d'immobilisation (40) a un dispositif électrique d'entraînement (13) commandé par le dispositif de commande (15).

10. Dispositif de protection vis-à-vis du soleil suivant l'une des revendications précédentes,
caractérisé en ce que les lames (3) comportent, au milieu, sur la face avant (37) plane, une nervure de renforcement, (39) servant à empêcher qu'elles se voilent et dirigée parallèlement à ses côtés longitudinaux, et en ce que l'extrémité libre de l'axe de rotation (9) des éléments de transmission (17) débouche dans un sabot d'encliquetage (9'), dans lequel la lame (3) associée pénètre, avec encliquetage, par l'extrémité supérieure de sa nervure de renforcement y présentant une contre-dépouille.

11. Dispositif de protection vis-à-vis du soleil suivant l'une des revendications précédentes, caractérisé
en ce que la largeur des lames est de 56 mm et l'intervalle mutuel maximum de centre-à-centre (A) entre deux lames (3) voisines est de 57 mm.

# FIG 1

# FIG 2

# FIG 3

FIG 4

FIG 5

FIG 6

FIG 7

## FIG 8

## FIG 9

## FIG 10

17